# EUROPEAN PATENT SPECIFICATION

(11) **EP 2 006 078 B1**
(45) Date of publication and mention of the grant of the patent: **25.05.2011**
(21) Application number: 08158406.2
(22) Date of filing: 17.06.2008
(51) Int. Cl.: B29D 30/46, B29D 30/28, B29D 30/16, B29D 30/30

(54) **Tire cord cutting apparatus and method for single line tire ply construction**
Reifencord-Schneidevorrichtung und Verfahren zur Konstruktion einer einreihigen Reifenschicht
Appareil de découpe de corde pour pneu et procédé de construction de pli de pneu à ligne unique

(30) Priority: 20.06.2007 US 820765; 20.06.2007 US 820764
(43) Date of publication of application: 24.12.2008
(73) Proprietor: The Goodyear Tire & Rubber Company, Akron, Ohio 44316-0001 (US)
(72) Inventor: Delgado, Andres Ignacio, Medina, OH 44256 (US); Girard, Jean-Claude, Copley, OH 44321 (US)
(74) Representative: Kutsch, Bernd

(56) References cited:
- WO-A-90/08031
- JP-A- 1 030 737
- SU-A1- 1 685 749
- US-A- 4 015 498
- US-A- 4 844 768
- US-A1- 2002 003 020

## Description

### Field of the Invention

This invention relates generally to an apparatus for manufacturing a toroidal carcass ply for a tire and, more specifically, to a cutting mechanism for cutting a cord feed line during the construction of a tire cord ply on an annular tire building surface. The invention also relates to a method for manufacturing a toroidal carcass ply for a tire on a build core and, more specifically, to method for locating a leading end of the carcass ply cord line at an intended initiation point on the build core during carcass ply construction

### Background of the Invention

Historically, the pneumatic tire has been fabricated as a laminate structure of generally toroidal shape having beads, a tread, belt reinforcement, and a carcass. The tire is made of rubber, fabric, and steel. The manufacturing technologies employed for the most part involved assembling the many tire components from flat strips or sheets of material. Each component is placed on a building drum and cut to length such that the ends of the component meet or overlap creating a splice.

This form of manufacturing a tire from flat components that are then formed toroidally limits the ability of the tire to be produced in a most uniform fashion. As a result, an improved method and apparatus has been proposed, the method involving applying a series of layers on a toroidal surface or core. A cord ply is formed on the core by placing and stitching one or more cords in continuous lengths onto a pre-applied elastomeric layer in predetermined cord paths. The method further includes dispensing the one or more cords from spools and guiding the cord in a predetermined path as the cord is being dispensed. Preferably, each cord, precoated with rubber or not so coated, is held against the elastomeric layer after the cord is placed and stitched and then indexing the cord path to a next circumferential location forming a loop end by reversing the direction of the cord and releasing the held cord after the loop end is formed and the cord path direction is reversed. The indexing of the toroidal surface establishes the cord pitch uniformly in discrete angular spacing at specific diameters.

A cord applicator head for construction of a cord ply on a toroidal surface in such a manner is disclosed in US-A- 2007-0125482 incorporated herein in its entirety by reference. The applicator head feeds a cord line between a pair of rollers positioned adjacent a toroidal tire building surface, each roller alternatively engaging and positioning the cord line as the applicator head moves back and forward across the toroidal surface. A cord ply in a preferred pattern is thus constructed on the toroidal surface. At an appropriate time in the cord application process, the cord line is severed by a cutting mechanism within the applicator head and the trailing cord line segment is paid out of the applicator head to complete a final path in the construction of the cord ply. A representative cutting mechanism within the applicator head is disclosed in US-A- 2007-0125208 likewise incorporated herein in its entirety by reference.

While working well, certain challenges arise from the use of the cutting mechanism disclosed in US-A- 2007-0125208 within the applicator head of US-A-2007-0125482. While a severing of the cord line within the applicator head can be timed such that the precise length of line required to complete a final cord path on the toroidal surface is achieved, a problem arises in accurately positioning the leading end of the severed cord line on the toroidal surface for a construction of the next cord ply layer. US-A- 2007-0125482 teaches that the free post-cut end of the cord line may be forced from the applicator head and positioned on the toroidal surface by pneumatic pressure. In such an operation, however, it is difficult to control the free end of the severed cord and accurately initiate laying the end segment against the toroidal surface at the precise location desired. The precise location of the free end of the severed cord on the toroidal surface may , for example, be defeated if the free end segment of the cord line becomes snagged within the applicator head during the pneumatic ejection sequence. An improper or less than accurate location of the free end of the severed cord line will cause the subsequent cord pattern to begin at an incorrect location and result in a flawed cord ply. Additionally, the aforementioned difficulty in accurately locating the leading cord end on the toroidal surface not only occurs at the beginning of the cord ply construction sequence but can also occur at an interim point in the cord ply construction. For example, the cord line may break unintentionally and require replacement of the free cord end on the toroidal surface for the ply construction procedure to resume. The supply of cord may also become depleted midway through the construction of a cord ply, requiring spool replacement. Rerouting a new line of cord through the applicator head will require placement of another free cord end on the toroidal surface in order for the cord ply construction to resume.

A need, accordingly, exists for a method and apparatus for accurately insuring that the leading end of a ply cord line that emerges from a ply cord applicator head is precisely located at an intended initiation point on a toroidal tire building core.

A further need exists for a method for constructing a carcass ply on a build core such that an end of the ply cord is precisely located where the carcass ply construction is to commence. The method to meet the industry's need must accurately insure that the leading end of a ply cord is predictably located prior to commencement of a carcass ply. The method and apparatus should operate predictably and reliably throughout repeated cycles as multiple ply layers are constructed on the toroidal surface. The improved method and apparatus should moreover function to accurately locate the leading end of the ply cord line on a toroidal core surface both at the initiation of a ply construction sequence or at the beginning point of a carcass ply construction, and at any interim point during the ply construction where such a need arises.

US-A- 4,844, 768 describes an apparatus for attaching belt-like materials which includes a cord cutting apparatus and a method for positioning an end of a cord line at a target location on an annular tire building drum according to the preamble of claim 1 or 8 respectively.

US-A- 4,015,498 describes a cutting apparatus including an anvil having a slot there through, a rotatable knife, annual support means, positioning means from moving the anvil support means into an operating position, and knife actuating means for rotating the knife within the anvil when the anvil is in an operating position.

### Summary of the Invention

The invention relates to an apparatus according to claim 1 and a method according to claim 8.

Dependent claims refer to preferred embodiments of the invention.

Pursuant to a preferred aspect of the invention, a cord cutting apparatus is provided for remotely cutting a terminal end segment of a tire cord ply from a toroidal tire building core surface. The apparatus includes a mechanism for capturing and controlling the terminal end segment. The apparatus further provides means for tensioning the end segment between the leading and trailing segment ends and a cutting mechanism moveable toward and away from the annular tire building surface for severing the cord end segment at a point opposite an intended or target initiation point on the tire build core. In a further aspect of the invention, a segment disposal mechanism is provided for transporting a severed portion of the terminal end segment away from the toroidal tire building surface. The disposal mechanism may but need not necessarily be an integral component of the tensioning mechanism.

The tensioning mechanism in another aspect of the invention may include clamp, such as in the form of gripping fingers for effecting a clamping engagement with the terminal end segment proximate the leading end of the terminal end segment; and a wiper mechanism proximate the trailing end of the terminal end segment for axially pulling the terminal end segment away from the clamp or holding the trailing end segment against the toroidal tire building core surface, whereby placing the terminal end segment in tension between the clamp and wiper mechanism. The wiper mechanism may but need not necessarily be configured as a roller or comprise a roller. In a further aspect of the invention, the tensioning and cutting mechanisms may be moveable between first respective cutting positions proximate the toroidal tire building core surface and second retracted positions allowing unobstructed access to the toroidal tire building core surface. Construction of a tire on the toroidal tire building core surface layer by layer is therefore not impeded by the cutting apparatus.

In another preferred aspect, the invention may provide a cord cutting apparatus for cutting a terminal end segment of a tire cord ply on an annular tire building surface with the apparatus generally including a clamp and a cord cutting device. The clamp is configured to grip the terminal end segment of the tire cord ply between leading and trailing end segments, and at least assist in applying tension between the leading and trailing end segments. The cord cutting device preferably includes a cutting element, wherein at least the cutting element is movable between a non-cutting position and a cutting position. The cutting element is preferably adapted to be proximate the tire cord ply on the annular tire building surface to cut the tire cord ply when in the cutting position.

In a further preferred aspect of the invention, the tensioning means and cutting means in the remote position allow relatively unobstructed access to the annular building surface for construction of a tire thereon.

In yet a further preferred aspect of the invention, the apparatus comprises means for rotating the annular tire building surface to position the terminal end segment opposite the tensioning means.

The method for positioning an end of a cord line at a target location on an annular tire building surface according to claim 8 includes positioning a cord line segment over the target location; tensioning the cord line segment between leading and trailing segment ends; and severing the cord line segment at a point between the leading and trailing segment ends so that the resultant cord line end is at the target location on the tire building surface. In another preferred aspect of the invention, the method includes moving cutting apparatus from a remote position to a proximate position relative to the annular tire building surface prior to severing the cord line segment. The cutting apparatus may also be moveable to a remote position relative to the annular tire building surface subsequent to severing the cord line segment so as to leave the annular tire building surface accessible for subsequent tire building operations.

The method of the present invention, includes transporting a severed portion of the cord line segment away from the annular tire building surface. A tensioning and axial alignment of the cord line segment may be achieved by suitable apparatus in an additional aspect of the invention prior to severing the cord line segment. In yet a further aspect, a tire cord ply may be constructed to extend from the cord line segment about at least a portion of the annular tire building surface prior to severing the cord line segment.

In another aspect, the invention provides a method for positioning an end of a cord line at an intended initiation point on an annular tire building surface. The method includes positioning an end segment of the cord line over the intended initiation point such that a free leading end and a trailing end of the end segment are positioned on opposite sides of the intended initiation point. The end segment is tensioned between the free leading end and the trailing end of the end segment, and the cord line is then severed at the intended initiation point. Tensioning the end segment may further include gripping the end segment proximate the free leading end on one side of the intended initiation point and holding the end segment proximate the trailing end on an opposite side of the intended initiation point. Holding the end segment may further include forcing the cord line onto the annular tire building surface with a wiper member. The cord line may be placed about at least a portion of the annular tire building surface starting with the positioning step and prior to severing the cord line at the intended initiation point.

### Definitions

"Axial" and "axially" mean the lines or directions that are parallel to the axis of rotation of the tire.

"Circumferential" means lines or directions extending along the perimeter of the surface of the annular tread perpendicular to the axial direction.

"Carcass" means the tire structure apart from the belt structure, tread, undertread, over the plies, but including beads, if used, on any alternative rim attachment.

"Casing" means the carcass, belt structure, beads, sidewalls and all other components of the tire excepting the tread and undertread.

"Cord" means one of the reinforcement strands that are comprised in the plies in a tire.

"Placement" means positioning a cord on a surface by means of applying pressure to adhere the cord at the location of placement along the desired ply path.

"Ply" means a layer of rubber-coated parallel cords.

"Radial" and "radially" mean directions radially toward or away from the axis of rotation of the tire.

"Winding" means a wrapping of a cord under tension onto a convex surface along a linear path.

### Brief Description of the Drawings

The invention will be described by way of example and with reference to the accompanying drawings in which:
FIG. 1 is front perspective view of the cutting apparatus.
FIG. 2 is a rear perspective view of the cutting apparatus.
FIG. 3 is an enlarged rear perspective view of an upper portion of the cutting apparatus.
FIG. 4 is an enlarged front perspective view of an upper portion of the cutting apparatus.
FIG. 4A is an enlarged front perspective view of an upper portion of the cutting apparatus shown with the clamping fingers in phantom and the cutting blades in a spaced apart mutual orientation for the purpose of illustration.
FIG. 4B is an enlarged front perspective view of the upper portion of the cutting apparatus shown in FIG. 4A with the cutting blades in a closed mutual orientation.
FIG. 4C is an enlarged front perspective view of the upper portion of the cutting apparatus shown in FIG. 4 showing movement of the clamping fingers inward into a clamping engagement with a ply cord segment.
FIG. 5 is a front elevation view of a tire building station showing the construction of a ply cord layer on a toroidal building surface and the cutting apparatus in a withdrawn position.
FIG. 5A is a sequential front elevation view to FIG. 5 showing withdrawal of the ply constructing tooling at the conclusion of a ply layer construction.
FIG. 5B is a sequential front elevation view to FIG. 5A showing movement of the cutting apparatus into position adjacent the toroidal build surface prior to a ply cord cutting procedure.
FIG. 6 is a side elevation view in sequence to FIG. 5B showing lateral movement of the cutting apparatus into a cutting position.
FIG. 7 is an enlarged view of a portion of FIG. 6 showing in detail the axial alignment of a ply cord segment by means of the cutting apparatus wiper mechanism.
FIG. 7A is a schematic view in sequence to FIG. 7 showing the gripper fingers clamping the leading end of the terminal ply cord segment and the wiper mechanism axial progression along the ply cord segment.
FIG. 7B is a schematic view in sequence to FIG. 7A showing reverse movement of the wiper mechanism along the ply cord segment placing the segment in tension.
FIG. 7C is a schematic view in sequence to FIG. 7B showing severing of the ply cord segment by the cutting mechanism and directional retraction of the wiper mechanism thereafter.
FIG. 7D is a schematic view in sequence to FIG. 7C showing movement of the cutting apparatus away from the toroidal build surface at the conclusion of the cutting procedure.

### Detailed Description of the Illustrative Embodiments

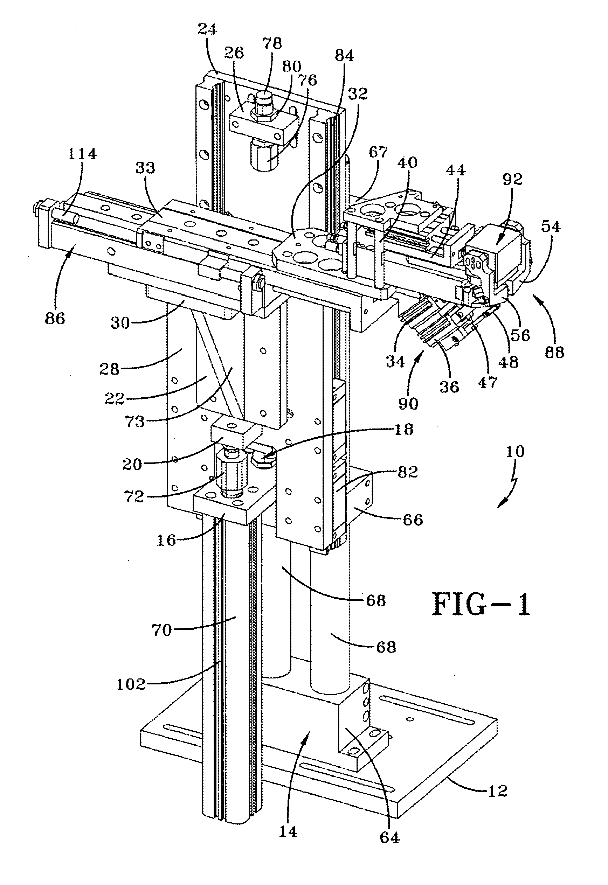

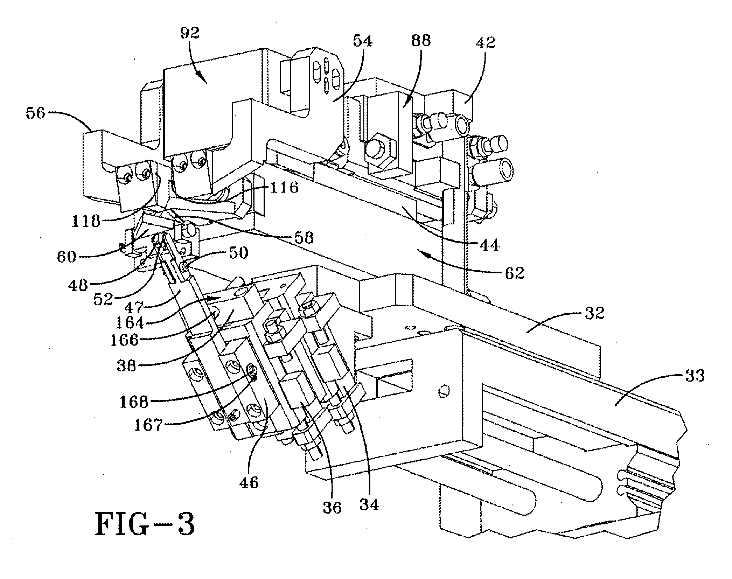

Referring initially to FIGS. 1, 2, 3, 4, , and 4A-C, the subject external cutter apparatus 10 is preferably used in conjunction with a tire cord ply apparatus of the type identified in co-pending U.S. Patent Application Serial No. 11/292,363 filed December 1, 2005 although the invention is not to be so limited. Other uses and applications for the external cutter apparatus 10 apparent to those skilled in the art will be understood and are intended to be within the scope of the invention.

The apparatus 10 is a free standing assembly including a support base plate 12, a column stand 14 mounted to plate 12; a stop mounting plate 16 vertically spaced above the base plate 12; a stop 18 mounted to plate 16; a rod coupler bracket 20 spaced vertically and mounted above the plate 16. A gusset 22 is positioned vertically above the bracket 20 and a column stand rectangular adapter plate 24 extends vertically therefrom. At the top of the apparatus an upper stop mounting plate 26 is provided mounted to the adapter plate 24. A vertically moveable linear bearing mounting plate 28 is slidably mounted to the adaptor plate 24. Mounted at a right angle to the upper end of the mounting plate 28 and extending horizontally outward is an upper mounting plate 30. A cutter mechanism mounting plate 32 is slidably mounted to move along a support plate 33 that likewise slides along a slide table 86.

A pair of elongate slide adapters 34, 36 of a type commercially available are mounted side by side to an underside of the mounting plate 32 and are coupled to work in tandem to extend a wiper mechanism to the necessary stroke required as will be explained. Mounted forward of the adapters 34, 36 is a spring plunger support block 38. Spacers 40 span between the cutter mounting plate 32 and a top mounted small slider mounting plate 42. A gripper mechanism mounting plate 44 is mounted to a forward end of the cutter mounting plate 32. A wiper support block 46 connects to the slide adapter 36 and moves therewith to extend and retract. A cantilevered arm 47 is coupled to the support block 46 and projects outward. A wiper blade 48 is rotationally mounted to the remote end of the cantilever arm 47 by means of a bearing clamp 50 and transverse shaft 52. The wiper blade 48, while in the preferred form as a roller member, may be alternatively configured if desired to accomplish its intended purpose as explained below.

Positioned at the forward end of the apparatus 10 is a gripper assembly 92 including a pair of parallel, L-shaped gripper arms 54, 56. The gripper arms 54, 56 are connected to a suitable drive mechanism within the assembly 92 (not shown) that moves the arms 54, 56 toward each other into a clamping orientation and away from each other in a de-clamped, separated orientation. Disposed and mounted below the arms 54, 56 are a pair of opposed cutter blades 58, 60. The blades 58, 60 and operably connected to a drive mechanism that closes the blades into a cutting mutual orientation and opens the blades into a divergent orientation. While in the preferred embodiment the blade 58 rides over the blade 60 to effect a cut, while blade 60 remains fixed and stationary, other alternative cutting movements between the blades or the use of other blade or cutting devices may be utilized if desired.

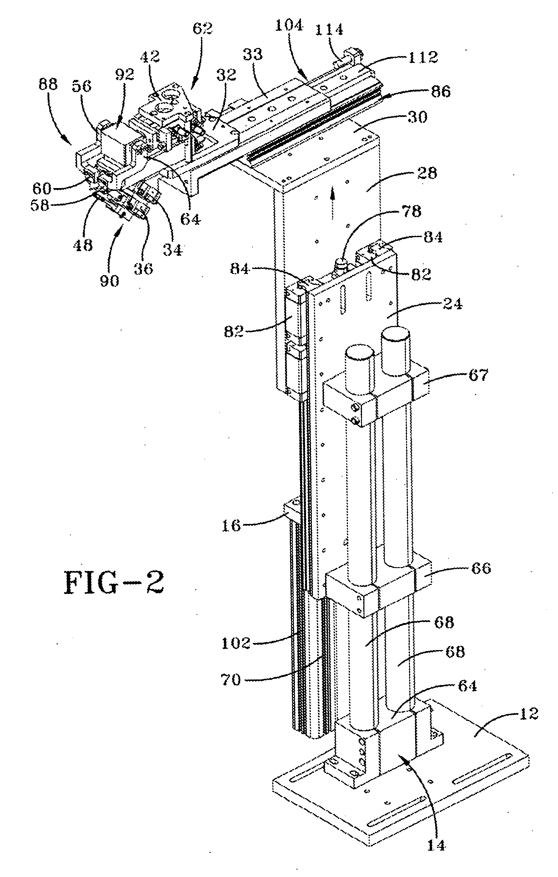

The cutting tooling mounted at the top of the cutting apparatus 10 is referred herein generally by numeral 62. The tooling 62 moves along a horizontal axis between an extended position required for conducting a cutting procedure and a retracted position between cuts. As best viewed from FIG. 2, a support block 64 is situated on the base plate 12 and parallel support shafts project upward from the block 64 through lower and upper support brackets 66, 67, respectively. An air cylinder 70 is mounted vertically and includes a moveable rod 71 coupled by fitting 72 to the rod coupler bracket 20. So connected, the cylinder 70 drives the upper cutter assembly between an extended "up" position and a retracted "down" position along the support shafts 68. An angle plate 74 reinforces the connection between vertical axis mounting plate 30 and gusset 22. A stopper nut 76 is mounted at the top mid-section of the adapter plate 24. Upward movement of the upper cutter assembly from actuation of cylinder 70 is terminated by abutment of the upper cutter assembly against the stopper nut 76. A shock absorber 78 is fixed above the stopper nut 76 to minimize the shock from terminal abutment of the upper cutter assembly against stopper nut 76.

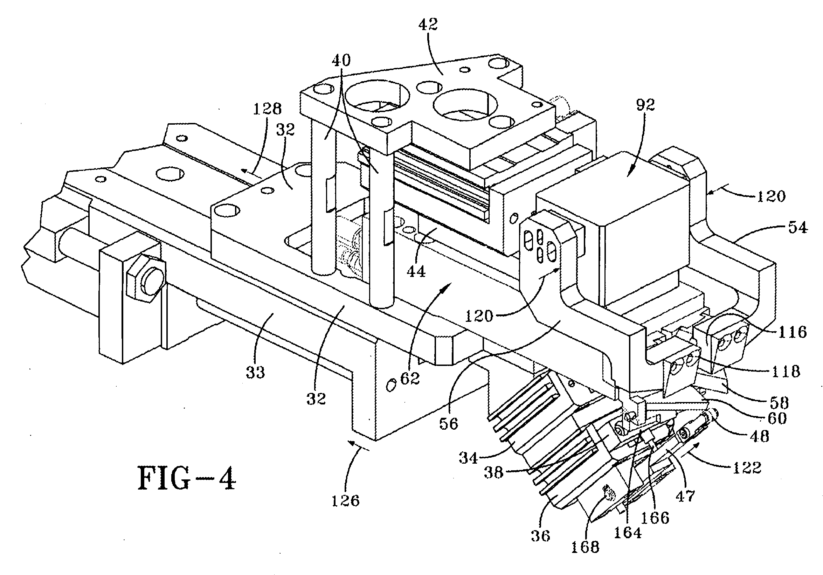

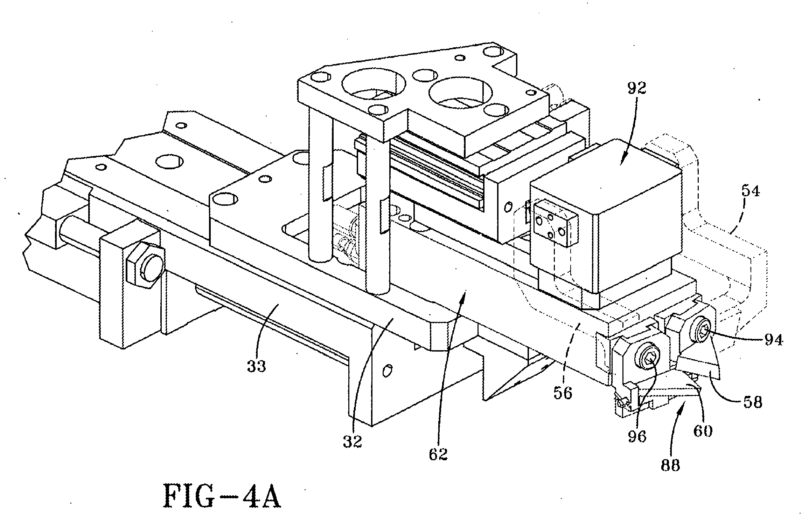

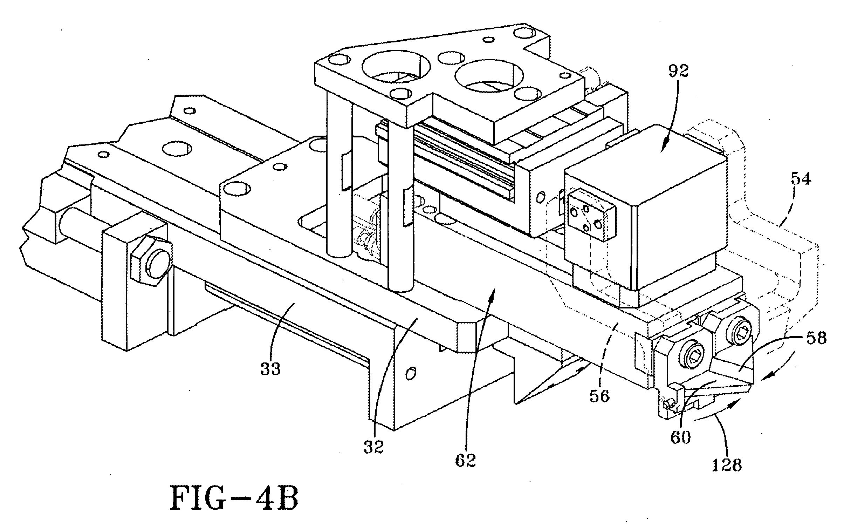

The linear bearing mounting plate 28 (reference FIG. 2) is fitted with runner blocks 82 at opposite sides, each runner block 82 having a dovetail socket adapted to receive a correspondingly located and complementarily profiled guide rail 84. Parallel guide rails 84 extend vertically along opposite sides of the adapter plate 24 and the upper cutter assembly rides the rails 84 between the extended "up" and retracted "down" positions. An air slide table assembly, referenced generally by numeral 86 in FIG. 2, is mounted to the upper mounting plate 30. Upper assembly 62 is mounted to move with the table assembly 86. Upper assembly 62 is disposed at the forward end of the table assembly 86 and includes a cutter subassembly 88; a wiper subassembly 90; and a parallel gripper arm subassembly 92. The cutting blades 58, 60 as will be seen from FIG. 4A and 4B, are affixed to the forward end of upper apparatus 62 by bolts 94, 96. A conventional appropriate drive mechanism (not shown) functions to pivot the overlying blade 58 over the opposite blade 60 in a cutting stroke.

Generally, the wiper subassembly 90 is mounted at the bottom, the cutter sub-assembly 88 in the middle; and the gripper arm-sub-assembly 92 at the top. The plate 33 extends along the Y-axis, riding upon a rail 112. Stop 114 is situated to engage the plate 33 as it reaches the terminal end of a retraction stroke. The apparatus 10 thus extends and retracts vertically along a Y-axis and extends and retracts along an X-axis to move the upper assembly 62 into appropriate position for sequential operation of the subassemblies 88, 90, and 92 as will be explained.

As will be apparent from FIGS. 1-4, appropriate sensors are disposed to sense for purpose of electronically controlling the positions of the table assembly 86 along the X and Y axis. An accurate and controlled location of the cutting apparatus 62 is thereby facilitated. Likewise, it will be appreciated that the operation of subassemblies 88, 90, and 92 are electronically controlled and that suitable commercially available sensors are utilized to facilitate controlled movement of the parallel arms 54, 56 in subassembly 92; cutting blades 58, 60 in subassembly 88; and wiper mechanism 48 in subassembly 90.

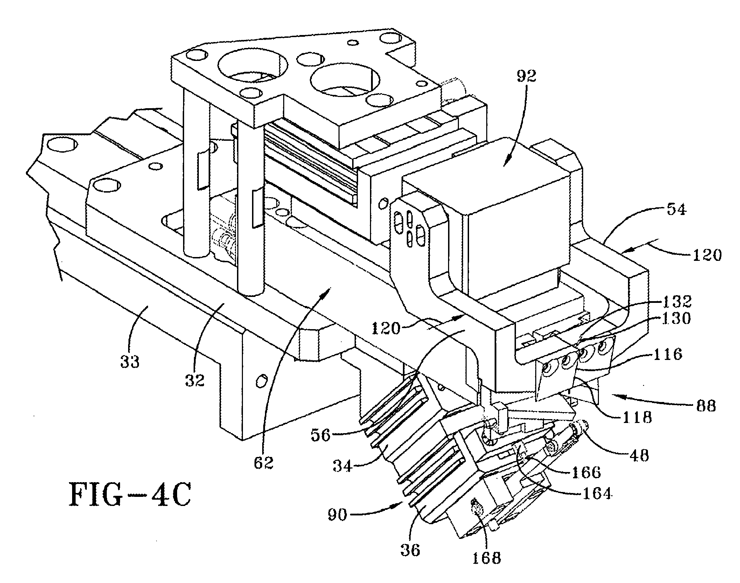

Details of the gripper subassembly 92 are shown in FIGS. 4 and 4A-C. The gripper arms 54, 56 include opposed forward end surfaces 116, 118. The surfaces 116, 118 move with the arms toward each other in direction 120 into a gripping relationship of suitable spacing to clamp to and hold fast a portion of tire cord. The surfaces 116,118 likewise move apart with respective arms 54, 56 to retract from a gripping relationship under machine control. As will further be appreciated, the wiper member 48 carried by cantilever arm 47 moves in direction 122 to extend and retract. The slide adaptors 34, 36 cooperate to provide the wiper member 48 with the desired stroke length. Plate 32 carries the upper apparatus 62 in a movement along the X-axis as indicated by directional arrow 124. In addition, the plate 32 and apparatus 62 are carried on plate 33 along a path indicated at arrow 126. FIG. 4B illustrates the pivotal movement of cutting blades 58, 60 during a cutting stroke along pivot path 128.

Apparatus 62 as shown in FIG. 4C is repositionable so as to be oriented to cut an end segment 130 of a cord ply. The segment 130 includes a leading segment end 132 and a trailing segment end 134. Segment 130 represents the leading portion of a line of tire cord ply or ply portion that is to be constructed to a tire building core as will now be explained.

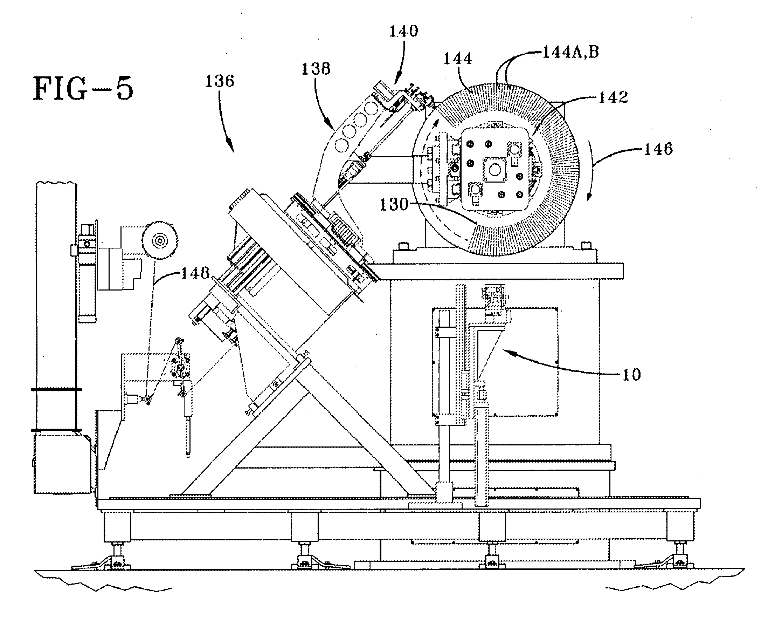

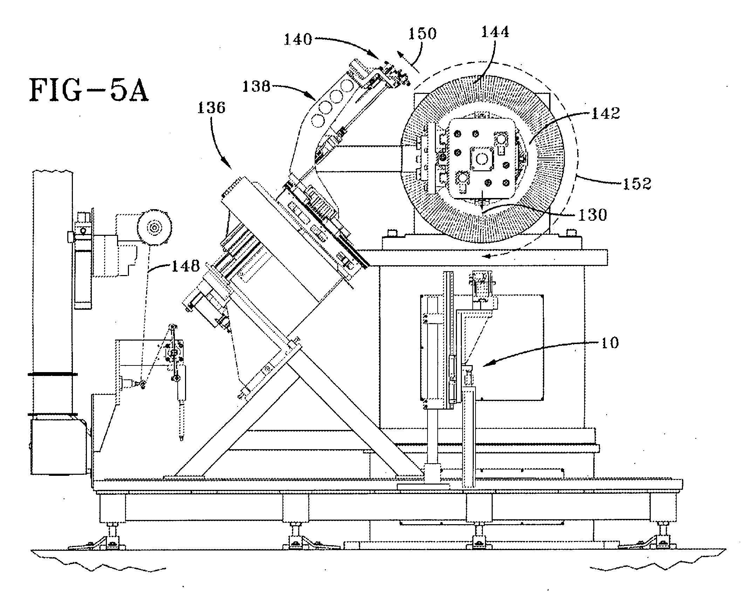

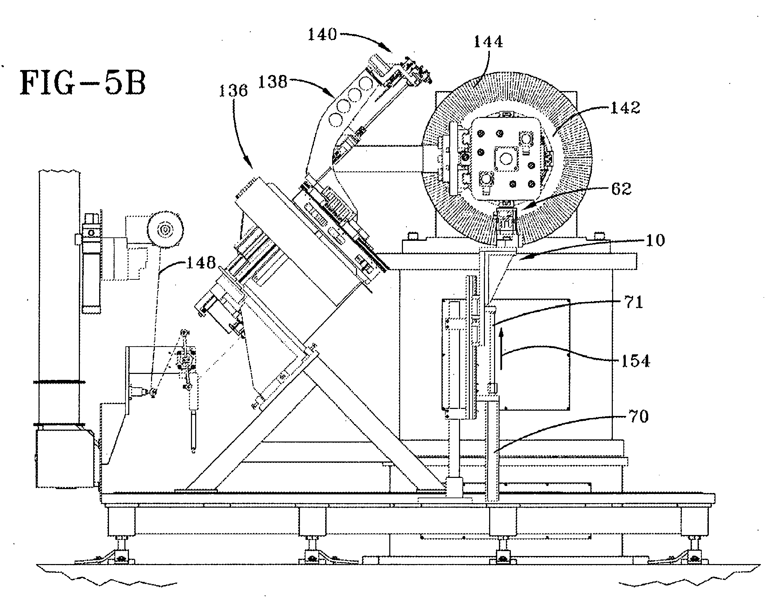

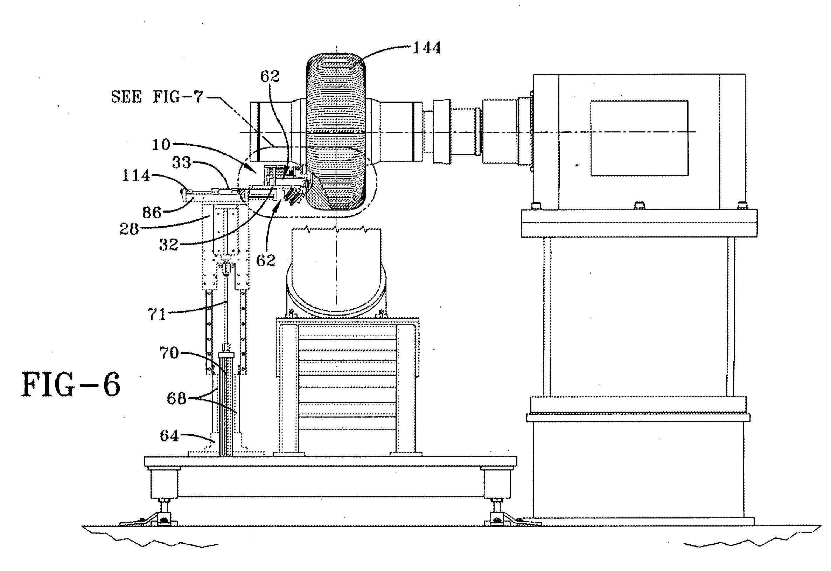

With reference to FIGS. 5, 5A,B, and 6 the subject cutting apparatus 10 is intended for preferred use with cord construction apparatus 136 although other applications or variations in apparatus apparent to those skilled in the art may be used with the cutting apparatus 10 of the invention. The cord construction apparatus 136 includes an elongate tooling arm 138 to which end-of-arm cord applicator head 140 is mounted at a terminal end. A toroidal or annular build core 142 is positioned within accessible reach of the applicator head 140 and the head 140 sequentially applies a pattern 144 of ply cord to a pre-applied elastomeric layer on the core 142 as the core rotates in direction 146. The cord ply thus created by the head 140 consists of plural cord paths such as 144A, B with ends of the paths connecting to adjacent paths by a loop portion. A supply of cord 148 is routed through the tooling arm 138 to the applicator head 148 and is fed from the head to create the desired pattern 144. Tooling of the type illustrated is disclosed in co-pending US-A- 2007-0125482 incorporated herein by reference.

In order to create the desired pattern 144, the leading free end of the cord line 130 must be precisely located on the core 142 at a targeted initiation point. However, for reasons described previously, it is difficult to control the free end of the cord line 130 as it is fed from the applicator head 148. Accordingly, in order to initiate a cord ply at the exact point on the core desired, a leading end segment 130 is fed from the applicator head to the core so as to overlay or extend past the desired or intended initiation point of the cord line 148. The leading cord end segment 130 remains over the initiation point on the core until after the cord ply is fully constructed. At the conclusion of the cord ply construction, a cutting step is conducted to precisely sever the free cord end segment 130 at the intended initiation point utilizing the cutting apparatus 10. The leading cord end segment 130 is at this point severed by the cutting apparatus 10 leaving the initiating end of the cord ply at precisely the intended initiation point on the core.

Operation of the cutting mechanism 10 is illustrated sequentially in FIGS. 5, 5A, 5B, and 6. The cord construction occurs as the core 142 is rotated in direction 146 as shown in FIG. 5. The leading cord segment 130 remains attached throughout the cord construct at the point of ply origin on the core. At the conclusion of the cord ply construct, as seen in FIG. 5A, the applicator head 140 is moved away from the core 142 and the core 142 is rotated until the leading cord segment 130 is opposite the cutting apparatus 10. It will be appreciated that the leading cord segment 130 may be axially askew or may be laying over under gravitational influence opposite the cutting apparatus 10. Apparatus 10 compensates for axial misalignment of the segment 130 prior to effecting a cut as will be explained.

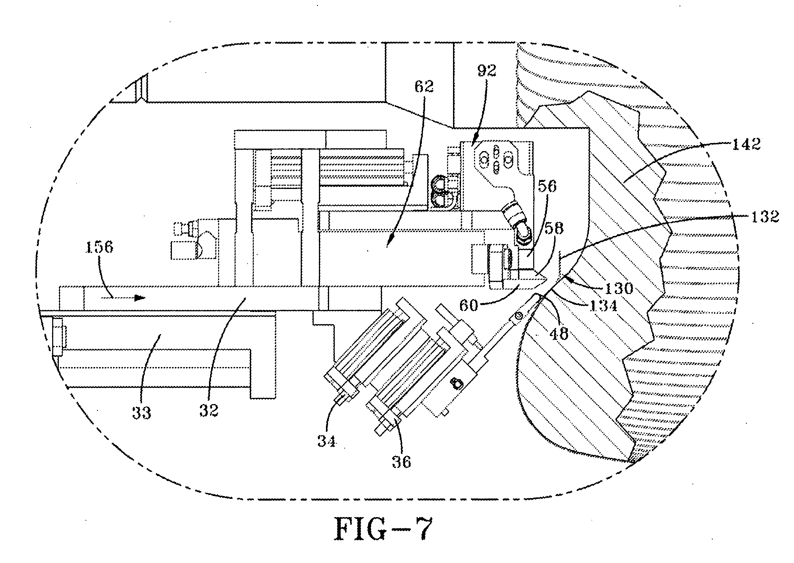

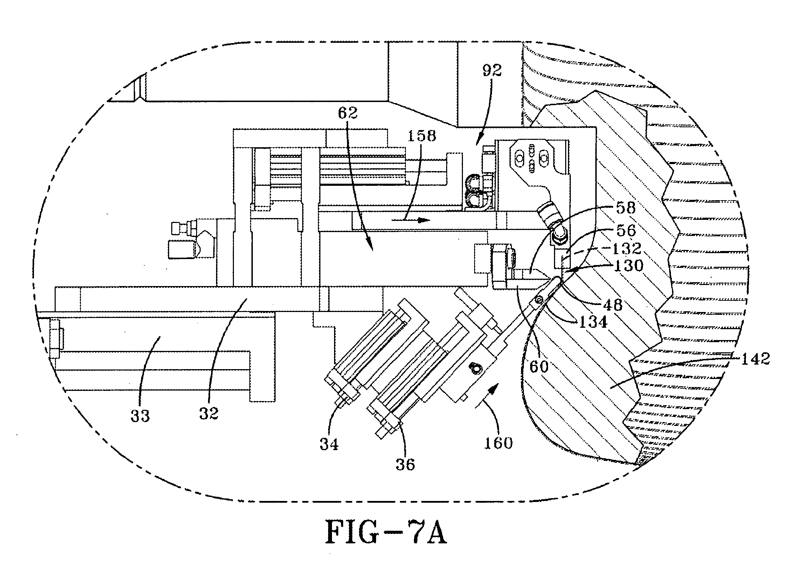

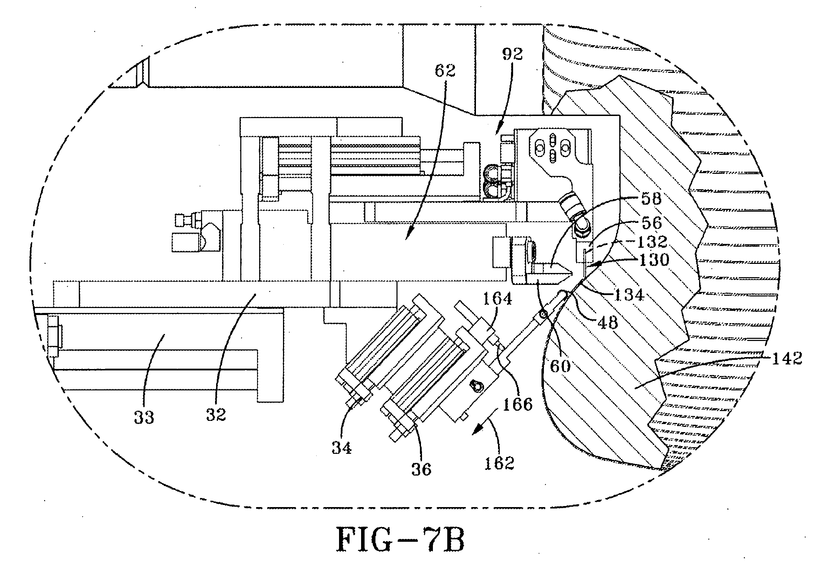

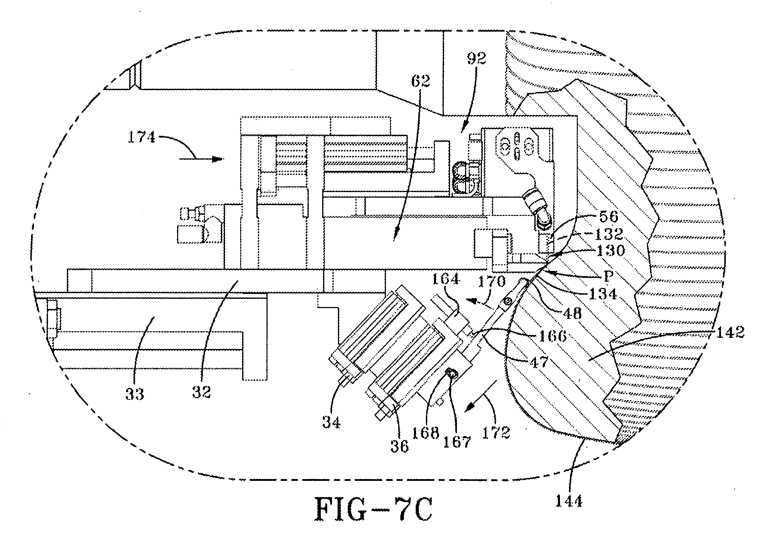

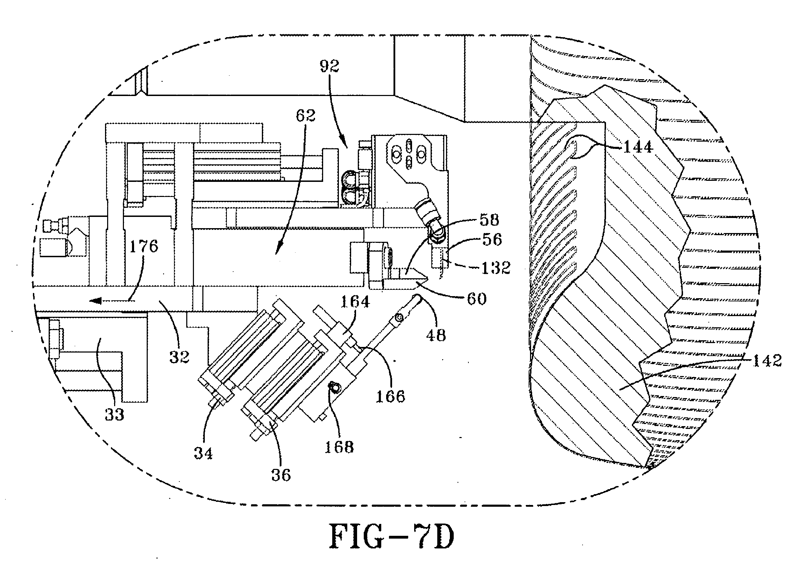

FIG. 5B illustrates vertical extension of the cutting apparatus by means of air cylinder rod 71 in direction 154. Upper apparatus assembly 62 is thereby elevated to the same elevation as the ply layer on core 142. The upper apparatus assembly 62 is then extended horizontally as shown in FIG. 6 until the assembly 62 is brought into an operational proximity with the cord ply 144 and, more specifically, the leading end segment 130 of the cord ply. The requisite horizontal extension of the upper apparatus assembly 62 toward the cord ply 144 is effected by staged extension of apparatus mounting plates 32, 33 in the direction 156 as depicted in FIG. 7.

FIG. 7, 7A-D illustrate in detail the sequential operation of the cutting apparatus 10. The upper apparatus assembly 62 is extended inward in direction 174 to a position opposite the leading end segment 130 of the completed cord ply. As explained previously, end segment 130 overlaps the initial starting point of cord ply construction on the build core 142. End segment includes a free leading end 132 and a trailing end 134. The wiper blade 48 (or roller member) is extended by operation of the slide adaptors 34, 36 a sufficient stroke to engage against the trailing end 134 of the cord end segment 130 as seen in FIG. 7. Thereafter, as shown in FIG. 7A, the wiper blade 48 is further extended toward the leading end 132, whereby axially aligning and straightening the end segment 130. Upon achieving straightening axial alignment, the gripper fingers 54, 56 of the parallel gripper assembly 92 are moved inward and gripping surfaces 116, 118 clamp the leading end 132 of the leading end segment 130.

Wiper member 48 is then retracted a distance in the direction 162 as shown in FIG. 7B. Contact is maintained between the wiper member 48 and the trailing end 134 of the end segment 130 holding the trailing end 134 firmly against the core 142. The end segment 130 is thus held in tension between opposite ends 132, 134 by the clamped fingers 54, 56 and the roller member 48, respectively. The cutting fingers 58, 60 are extended in direction 174 into a cutting relationship with the end segment 130 as shown in FIG. 7C. The cutting fingers 54, 56 are actuated and sever the end segment 130 at point P. The point P represents the precise desired or intended initiation point for the cord ply layer 144. A precise location of the severed end of the cord ply layer 144 at point P ensures that cord ply initiates at an optimal point on the tire build core 142.

As will be appreciated from FIG. 7C, the wiper blade 48 is affixed to the cantilevered arm 47 that is pivotally attached to support block 46 by means of pin 167. Pin 167 has a recoil spring 168 affixed thereto. A spring plunger mechanism 164 is mounted to the leading end of the slide adapter assemblies 34, 36. The mechanism 164 includes a biasing plunger 166 positioned to engage and bear against the arm 47. The plunger 166 biases the arm 47 outward during the wiping operation and presses the wiper member 48 against the cord trailing end 134 as described above. After the cutting operation, the biasing force from the plunger 166 is removed, allowing the wiper member arm 47 to pivot away from the core 142 under the influence of the pivot axis spring member 168 as shown by directional arrow 170 of FIG. 7C. Engagement between the wiper member 48 and the trailing end 134 of the ply cord 144 is thereby broken and the wiper member 48 is then further retracted by the slide adapters 34, 36 in direction 172.

From FIG. 7D the upper apparatus is shown with the wiper member 48 fully retracted; the cutting mechanism 58, 60 in a retracted position; and the clamping fingers 54, 56 holding the severed leading end 132 of the cord. The upper assembly is then retracted in direction 176, moving away from the toroidal build core 142. The upper assembly 62 is thus moved into a position leaving the build core 142 unobstructed for construction of subsequent layers to the build core as required. The entire cutting apparatus 10 may also be lowered into a retracted position as shown in FIG. 1 to further place the apparatus in a position that will not interfere with subsequent tire build operation.

The clamping or gripping fingers 54, 56 maintain clamped control over the severed cord leading end segment 132 as the apparatus 62 is withdrawn. After the apparatus 62 is retracted, the gripping fingers 54, 56 are opened to discharge the cord leading end segment 132 away from the build core 142. The risk of segment 132 becoming inadvertently attached to the build core 142 or to the tire layers constructed on the core is thereby prevented. The point P shown in FIG. 7C represents the severed end of the cord ply 148 and is located at the precise initiation point desired for cord ply layer construction. By making the severed end of the cord ply coincident with the initiation point P at the conclusion of the ply layer construction, rather than at the beginning, a precise placement of a cord line end at a precise location on an annular build core may be achieved

While the initiation point P (FIG. 7C) most commonly will be the point at which construction of a cord ply begins, should a disruption in the cord ply making procedure occur mid-ply, the cutting apparatus 10 may be used in like manner. Such a disruption may be the result of cord line breakage or replacement of a depleted cord line supply spool. In such an event, it will be necessary to resume construction of the cord ply at an interim point in the ply construction. The cord line end may be located at an initiation point by means of the above procedure by creation of a cord line end segment affixed over the interim initiation point. The construction of the cord ply may then be resumed until completion. At the conclusion of the construction, the cutting apparatus 10 may be extended and used to trim the cord line end segment at the precise initiation point desired in the manner explained above.

From the foregoing, it will be appreciated that the apparatus 10 represents an illustrative apparatus for accurately insuring that the leading end of a ply cord line from a ply cord applicator head is precisely located at an intended initiation point on a toroidal tire building core. The apparatus 10 operates predictably and reliably throughout repeated cycles as multiple ply layers are constructed on the toroidal surface. The apparatus functions to accurately locate the leading end of the ply cord line on a toroidal core surface, whether at the initiation of a ply construction or at any interim point during the ply construction where such a need arises.

In addition, the apparatus 10 operates according to a method wherein a free end of a ply cord line is positioned over an initiation point P on a tire build core; the ply cord end segment is captured and controlled by apparatus components engaging a leading segment end and a trailing segment; the end segment is axially aligned and placed in tension between the leading and trailing ends; and the end segment is severed precisely at an intended initiation point P. The method further includes retracting the apparatus away from the tire build core, leaving the core unobstructed and accessible for subsequent tire build operations. The method also may include retaining control over a severed portion of the cord line end segment and moving the severed portion away from the tire build core for disposal as the apparatus retracts.

The method may further include moving the cutting apparatus 58, 60 away from the annular tire building surface 142 subsequent to severing the cord line segment 130 in order to leave the surface 142 unobstructed for subsequent further tire building operations. Also, in preferably transporting a severed portion of the cord line segment 130 away from the annular tire building surface 142, the risk of the severed portion becoming lodged within the cord building apparatus or in the tire construction itself may be avoided. Within the context of the invention, the cord line segment 130 may thus be positioned opposite the cutting apparatus 58, 60 by rotation of the build core 142, and then axially aligned and placed in tension prior to the cutting operation. The tire cord ply 148 is pursuant to the invention may therefore be constructed about the annular tire building surface 142 extending from the cord line segment 130 prior to severing the cord line segment at point P.

## Claims

1. A cord cutting apparatus (10) for cutting a terminal end segment (130) of a tire cord ply on an annular tire building surface, comprising:
tensioning means for tensioning the terminal end segment (130) of the tire cord ply between leading and trailing segment ends (132, 134); and
cutting means (62) moveable between a remote position and a proximate position relative to the annular tire building surface, the cutting means in the proximate position being configured to sever the terminal end segment (130) at a location between the leading and trailing segment ends (132, 134); **characterized in that**
the apparatus further comprises segment disposal means for transporting a severed portion of the terminal end segment (130) away from the annular tire building surface, the segment disposal means comprising gripper fingers (54, 56) for clamping engagement with the terminal end segment (130), the gripper fingers (54, 56) moving with the severed portion of the terminal end segment (130) to a location away from the annular tire building surface.

2. The apparatus according to claim 1 wherein the tensioning means includes the opposed gripper fingers (54, 56).

3. The apparatus according to at least one of the previous claims wherein the tensioning means comprise:
a first mechanism for clamping engagement with the terminal end segment (130) proximate the leading end of the terminal end segment; and
a second mechanism proximate the trailing end of the terminal end segment (130) for axially pulling the terminal end segment (130) away from the first mechanism to place the terminal end segment in tension between the first and second mechanisms.

4. The apparatus according to claim 3 wherein the first mechanism comprises opposed gripper fingers (54, 56) for clamping engagement with the terminal end segment (130), the gripping fingers (54, 56) preferably moving a severed portion of the terminal end segment (130) to a location away from the annular tire building surface and/or wherein the second mechanism includes a terminal end segment engaging wiper member (48), the wiper member (48) preferably traversing along at least a portion of the terminal end segment (130) to axially align the terminal end segment (130).

5. The cord cutting apparatus according to at least one of the previous claims comprising:
a clamp configured to grip the terminal end segment (130) of the tire cord ply between leading and trailing end segments (132, 134), and at least assist in applying tension between the leading and trailing end segments; and
a cord cutting device including a cutting element (62), wherein at least the cutting element (62) is movable between a non-cutting position and a cutting position, and the cutting element (62) is adapted to be proximate the tire cord ply on the annular tire building surface to cut the tire cord ply when in the cutting position.

6. The apparatus according to claim 5 wherein the clamp further comprises gripping fingers (54, 56) configured to grip the terminal end segment (130) of the tire cord ply, and wherein the apparatus optionally further comprises a wiper member (48) configured to hold the trailing end segment of the tire cord ply such that the terminal end segment is in tension between the clamp and the wiper member (48).

7. The apparatus according to claim 6 wherein the wiper member (48) is mounted for linear movement so as to allow traversal of the wiper member (48) along at least a portion of the terminal end segment (130).

8. A method for positioning an end of a cord line at a target location on an annular tire building surface, the method comprising:
positioning a cord line segment over the target location;
tensioning the cord line segment between leading and trailing segment ends (132, 134) by tensioning means; and
severing the cord line segment using cutting means (62) at a point between the leading and trailing segment ends (132, 134) at which a resultant end of the cord line is located at the target location on the annular tire building surface; **characterized in that** the method further comprises
providing segment disposal means, the segment disposal means transporting a severed portion of the terminal end segment (130) away from the annular tire building surface and the segment disposal means comprising gripper fingers (54, 56) for clamping engagement with the terminal end segment (130), the gripper fingers (54, 56) moving with the severed portion of the terminal end segment to a location away from the annular tire building surface.

9. The method according to claim 8 further comprising
moving the cutting means (62) from a remote position to a proximate position relative to the annular tire building surface prior to severing the cord line segment and/or
moving the cutting means (62) to a remote position relative to the annular tire building surface subsequent to severing the cord line segment.

10. The method according to claim 8 or 9 further comprising at least one of the steps of transporting a severed portion of the cord line segment away from the annular tire building surface;
axially aligning the cord line segment while placing the cord line segment in tension;
axially aligning the cord line segment relative to the cutting means (62) prior to severing the cord line segment optionally including constructing a tire cord ply to extend from the cord line segment about at least a portion of the annular tire building surface prior to severing the cord line segment.

11. The method according to at least one of the claims 8 to 10 further comprising rotationally repositioning the annular tire building surface to orient the cord line segment opposite the cutting means (62) prior to severing the cord line segment, and, optionally, constructing a tire cord ply to extend from the cord line segment about at least a portion of the annular tire building surface prior to repositioning the annular tire building surface.

12. The method of at least one of the claims 8-11 comprising:
positioning an end segment of the cord line over an intended initiation point at the target location such that a free leading end and a trailing end of the end segment are positioned on opposite sides of the intended initiation point;
tensioning the end segment between the free leading end and the trailing end of the end segment; and
severing the cord line at the intended initiation point.

13. The method of at least one of the claims 8-12 comprising:
positioning an end segment of the cord line over the intended initiation point such that a free leading end and a trailing end of the end segment are positioned on opposite sides of the intended initiation point;
constructing a tire cord ply with the cord line by placing the cord line about at least a portion of the annular tire building surface starting at the end segment;
tensioning the positioned end segment between the free leading end and the trailing end of the positioned end segment; and
severing the cord line at the intended initiation point after constructing the tire cord ply with the cord line placed about at least a portion of the annular tire building surface.

14. The method according to claim 12 or 13 wherein tensioning the end segment further comprises:
gripping the end segment proximate the free leading end on one side of the intended initiation point; and
holding the end segment proximate the trailing end on an opposite side of the intended initiation point; holding the end segment further comprises forcing the cord line onto the annular tire building surface with a wiper member, and wherein the method further optionally comprises constructing a tire cord ply with the cord line by placing the cord line about at least a portion of the annular tire building surface starting with the positioning step and prior to severing the cord line at the intended initiation point.

## Patentansprüche

1. Cordschneidevorrichtung (10) zum Abschneiden eines endständigen Endsegments (130) einer Reifencordlage auf einer ringförmigen Reifenbaufläche, umfassend:
Spannmittel zum Anspannen des endständigen Endsegments (130) der Reifencordlage zwischen dem vorderen und dem hinteren Segmentende (132, 134); und
Schneidemittel (62), die zwischen einer entfernt gelegenen Position und einer nächstgelegenen Position bezüglich der ringförmigen Reifenbaufläche bewegbar sind, wobei die Schneidemittel in der nächstgelegenen Position dazu gestaltet sind, das endständige Endsegment (130) an einer Stelle zwischen dem vorderen und dem hinteren Segmentende (132, 134) abzutrennen; **dadurch gekennzeichnet, dass**
die Vorrichtung weiter Segmententsorgungsmittel zum Transportieren eines abgetrennten Teils des endständigen Endsegments (130) weg von der ringförmigen Reifenbaufläche umfasst, wobei das Segmententsorgungsmittel Greiffinger (54, 56) zum Klemmeingriff mit dem endständigen Endsegment (130) umfasst, wobei sich die Greiffinger (54, 56) mit dem abgetrennten Teil des endständigen Endsegments (130) zu einer Stelle weg von der ringförmigen Reifenbaufläche bewegen.

2. Vorrichtung nach Anspruch 1, wobei das Spannmittel die einander gegenüberstehenden Greiffinger (54, 56) beinhaltet.

3. Vorrichtung nach mindestens einem der vorgenannten Ansprüche, wobei die Spannmittel umfassen:
einen ersten Mechanismus zum Klemmeingriff mit dem endständigen Endsegment (130) nächst dem vorderen Ende des endständigen Endsegments; und
einen zweiten Mechanismus nächst dem hinteren Ende des endständigen Endsegments (130) zum axialen Wegziehen des endständigen Endsegments (130) von dem ersten Mechanismus, um das endständige Endsegment zwischen dem ersten und dem zweiten Mechanismus anzuspannen.

4. Vorrichtung nach Anspruch 3, wobei der erste Mechanismus einander gegenüberstehende Greiffinger (54, 56) zum Klemmeingriff mit dem endständigen Endsegment (130) umfasst, wobei die Greiffinger (54, 56) bevorzugt einen abgetrennten Teil des endständigen Endsegments (130) zu einer Stelle weg von der ringförmigen Reifenbaufläche bewegen, und/oder wobei der zweite Mechanismus ein an dem endständigen Endsegment angreifendes Abstreifelement (48) beinhaltet, wobei das Abstreifelement (48) sich bevorzugt entlang mindestens einem Teil des endständigen Endsegments (130) bewegt, um das endständige Endsegment (130) axial auszurichten.

5. Cordschneidevorrichtung nach mindestens einem der vorgenannten Ansprüche, umfassend:
eine Klemme, die dazu gestaltet ist, das endständige Endsegment (130) der Reifencordlage zwischen dem vorderen und dem hinteren Endsegment (132, 134) zu greifen und mindestens beim Anlegen von Spannung zwischen dem vorderen und dem hinteren Endsegment zu helfen; und
eine Cordschneidevorrichtung, welche ein Schneideelement (62) beinhaltet, wobei mindestens das Schneideelement (62) zwischen einer Nicht-Schneide-Position und einer Schneideposition bewegbar ist und das Schneideelement (62) dazu eingerichtet ist, nächst der Reifencordlage an der ringförmigen Reifenbaufläche zu sein, um die Reifencordlage abzuschneiden, wenn es sich in der Schneideposition befindet.

6. Vorrichtung nach Anspruch 5, wobei die Klemme weiter Greiffinger (54, 56) umfasst, die dazu gestaltet sind, das endständige Endsegment (130) der Reifencordlage zu greifen, und wobei die Vorrichtung optional weiter ein Abstreifelement (48) umfasst, das dazu gestaltet ist, das hintere Endsegment der Reifencordlage festzuhalten, sodass das endständige Endsegment zwischen der Klemme und dem Abstreifelement (48) angespannt ist.

7. Vorrichtung nach Anspruch 6, wobei das Abstreifelement (48) zur linearen Bewegung montiert ist, um ein Bewegen des Abstreifelements (48) entlang mindestens einem Teil des endständigen Endsegments (130) zu gestatten.

8. Verfahren zum Positionieren eines Endes eines Cordfadens an einer Zielstelle auf einer ringförmigen Reifenbaufläche, wobei das Verfahren umfasst:
Positionieren eines Cordfadensegments über der Zielstelle;
Anspannen des Cordfadensegments zwischen dem vorderen und dem hinteren Segmentende (132, 134) durch Spannmittel; und
Abtrennen des Cordfadensegments unter Verwendung von Schneidemitteln (62) an einem Punkt zwischen dem vorderen und dem hinteren Segmentende (132, 134), an dem ein resultierendes Ende des Cordfadens sich an der Zielstelle auf der ringförmigen Reifenbaufläche befindet; **dadurch gekennzeichnet, dass** das Verfahren weiter umfasst
das Vorsehen von Segmententsorgungsmitteln, wobei die Segmententsorgungsmittel einen abgetrennten Teil des endständigen Endsegments (130) von der ringförmigen Reifenbaufläche weg transportieren und die Segmententsorgungsmittel Greiffinger (54, 56) zum Klemmeingriff mit dem endständigen Endsegment (130) umfassen, wobei die Greiffinger (54, 56) sich mit dem abgetrennten Teil des endständigen Endsegments zu einer Stelle weg von der ringförmigen Reifenbaufläche bewegen.

9. Verfahren nach Anspruch 8, weiter umfassend
Bewegen der Schneidemittel (62) von einer entfernt gelegenen Position zu einer nächstgelegenen Position bezüglich der ringförmigen Reifenbaufläche vor dem Abtrennen des Cordfadensegments, und/oder
Bewegen der Schneidemittel (62) zu einer entfernt gelegenen Position bezüglich der ringförmigen Reifenbaufläche nach dem Abtrennen des Cordfadensegments.

10. Verfahren nach Anspruch 8 oder 9, weiter mindestens einen der Schritte umfassend des von der ringförmigen Reifenbaufläche weg Transportierens eines abgetrennten Teils des Cordfadensegments;
axialen Ausrichtens des Cordfadensegments während des Anspannens des Cordfadensegments;
axialen Ausrichtens des Cordfadensegments bezüglich der Schneidemittel (62) vor dem Abtrennen des Cordfadensegments, optional einschließlich des Konstruierens einer Reifencordlage, sodass sie sich von dem Cordfadensegment über mindestens einen Teil der ringförmigen Reifenbaufläche erstreckt, vor dem Abtrennen des Cordfadensegments.

11. Verfahren nach mindestens einem der Ansprüche 8 bis 10, umfassend weiter das drehende Neupositionieren der ringförmigen Reifenbaufläche, um das Cordfadensegment vor dem Abtrennen des Cordfadensegments gegenüber von den Schneidemitteln (62) auszurichten, und optional das Konstruieren einer Reifencordlage, sodass sich sie von dem Cordfadensegment um mindestens einen Teil der ringförmigen Reifenbaufläche erstreckt, vor dem Neupositionieren der ringförmigen Reifenbaufläche.

12. Verfahren nach mindestens einem der Ansprüche 8-11, umfassend:
Positionieren eines Endsegments des Cordfadens über einem beabsichtigten Anfangspunkt an der Zielstelle, sodass ein freies vorderes Ende und ein hinteres Ende des Endsegments an gegenüberliegenden Seiten des beabsichtigten Anfangspunkts positioniert sind;
Anspannen des Endsegments zwischen dem freien vorderen Ende und dem hinteren Ende des Endsegments; und
Abtrennen des Cordfadens an dem beabsichtigten Anfangspunkt.

13. Verfahren nach mindestens einem der Ansprüche 8-12, umfassend:
Positionieren eines Endsegments des Cordfadens über dem beabsichtigten Anfangspunkt, sodass ein freies vorderes Ende und ein hinteres Ende des Endsegments an gegenüberliegenden Seiten des beabsichtigten Anfangspunkts positioniert sind;
Konstruieren einer Reifencordlage mit dem Cordfaden durch Platzieren des Cordfadens um mindestens einen Teil der ringförmigen Reifenbaufläche, beginnend an dem Endsegment;
Anspannen des positionierten Endsegments zwischen dem freien vorderen Ende und dem hinteren Ende des positionierten Endsegments; und
Abtrennen des Cordfadens an dem beabsichtigten Anfangspunkt nach Konstruieren der Reifencordlage mit dem Cordfaden, der um mindestens einen Teil der ringförmigen Reifenbaufläche platziert ist.

14. Verfahren nach Anspruch 12 oder 13, wobei das Anspannen des Endsegments weiter umfasst:
Greifen des Endsegments nächst dem freien vorderen Ende an einer Seite des beabsichtigten Anfangspunkts; und
Festhalten des Endsegments nächst dem hinteren Ende an einer gegenüberliegenden Seite des beabsichtigten Anfangspunkts; Festhalten des Endsegments umfasst weiter das Zwingen des Cordfadens auf die ringförmige Reifenbaufläche mit einem Abstreifelement, und wobei das Verfahren weiter optional das Konstruieren einer Reifencordlage mit dem Cordfaden umfasst, durch Platzieren des Cordfadens um mindestens einen Teil der ringförmigen Reifenbaufläche, beginnend mit dem Positionierungsschritt und vor dem Abtrennen des Cordfadens an dem beabsichtigten Anfangspunkt.

## Revendications

1. Appareil de coupe de câblé (10) pour couper un segment d'extrémité terminale (130) d'un pli câblé pour bandage pneumatique sur une surface annulaire de confection de bandage pneumatique, comprenant :
un moyen de mise sous tension pour la mise sous tension du segment d'extrémité terminale (130) du pli câblé pour bandage pneumatique entre des extrémités de segment avant et arrière (132, 134) ; et
un moyen de coupe (62) mobile entre une position éloignée et une position rapprochée par rapport à la surface annulaire de confection du bandage pneumatique, le moyen de coupe, dans sa position rapprochée, étant configuré pour couper le segment d'extrémité terminale (130) à un endroit situé entre les extrémités de segment avant et arrière (132, 134) ; **caractérisé en ce que**
l'appareil comprend en outre un moyen d'élimination de segment pour transporter une portion coupée du segment d'extrémité terminale (130) à l'écart de la surface annulaire de confection du bandage pneumatique, le moyen d'élimination de segment comprenant des doigts de préhension (54, 56) pour entrer en contact par serrage avec le segment d'extrémité terminale (130), les doigts de préhension (54, 56) se déplaçant avec la portion coupée du segment d'extrémité terminale (130) jusqu'à un endroit situé à l'écart de la surface annulaire de confection du bandage pneumatique.

2. Appareil selon la revendication 1, dans lequel le moyen de mise sous tension englobe les doigts de préhension opposés (54, 56).

3. Appareil selon au moins une des revendications précédentes, dans lequel le moyen de mise sous tension comprend :
un premier mécanisme pour la mise en contact par serrage avec le segment d'extrémité terminale (130) à proximité de l'extrémité avant du segment d'extrémité terminale ; et
un deuxième mécanisme à proximité de l'extrémité arrière du segment d'extrémité terminale (130) pour tirer en direction axiale le segment d'extrémité terminale (130) à l'écart du premier mécanisme afin de mettre le segment d'extrémité terminale sous tension entre les premier et deuxième mécanismes.

4. Appareil selon la revendication 3, dans lequel le premier mécanisme comprend des doigts de préhension opposés (54, 56) pour la mise en contact par serrage avec le segment d'extrémité terminale (130), les doigts de préhension (54, 56) déplaçant de préférence une portion coupée du segment d'extrémité terminale (130) jusqu'à un endroit situé à l'écart de la surface annulaire de confection du bandage pneumatique et/ou dans lequel le deuxième mécanisme englobe un membre de raclage (48) qui entre en contact avec le segment d'extrémité terminale, le membre de raclage (48) s'étendant de préférence le long d'au moins une portion du segment d'extrémité terminale (130) pour venir se mettre en alignement axial avec le segment d'extrémité terminale (130).

5. Appareil de coupe de câblé selon au moins une des revendications précédentes, comprenant :
une pince configurée pour saisir le segment d'extrémité terminale (130) du pli câblé pour bandage pneumatique entre des segments d'extrémité avant et arrière (132, 134), et qui pour le moins facilite l'application d'une tension entre les segments d'extrémité avant et arrière ; et
un dispositif de coupe de câblé englobant un élément de coupe (62), dans lequel au moins l'élément de coupe (62) est mobile entre une position de repos et une position de coupe, et l'élément de coupe (62) est conçu pour venir se disposer à proximité du pli câblé pour bandage pneumatique sur la surface annulaire de confection du bandage pneumatique pour couper le pli câblé pour bandage pneumatique lorsqu'il se trouve dans la position de coupe.

6. Appareil selon la revendication 5, dans lequel la pince comprend en outre des doigts de préhension (54, 56) qui sont configurés pour saisir le segment d'extrémité terminale (130) du pli câblé pour bandage pneumatique, et dans lequel l'appareil comprend en outre de manière facultative un membre de raclage (48) qui est configuré pour maintenir le segment d'extrémité arrière du pli câblé pour bandage pneumatique de telle sorte que le segment d'extrémité terminale est mis sous tension entre la pince et le membre de raclage (48).

7. Appareil selon la revendication 6, dans lequel le membre de raclage (48) est monté pour effectuer un mouvement linéaire de façon à permettre le déplacement du membre de raclage (48) le long d'au moins une portion du segment d'extrémité terminale (130).

8. Procédé de positionnement d'une extrémité de ligne de câblé à un endroit cible sur une surface annulaire de confection d'un bandage pneumatique, le procédé comprenant le fait de :
positionner un segment de ligne de câblé par-dessus l'endroit cible ;
mettre sous tension le segment de ligne de câblé entre des extrémités de segment avant et arrière (132, 134) via un moyen de mise sous tension ; et
couper le segment de ligne de câblé en utilisant un moyen de coupe (62) à un endroit situé entre les extrémités de segment avant et arrière (132, 134), auquel une extrémité résultante de la ligne de câblé est située à l'endroit cible sur la surface annulaire de confection du bandage pneumatique, **caractérisé en ce que** le procédé comprend en outre le fait de :
procurer un moyen d'élimination de segment, le moyen d'élimination de segment transportant une portion coupée du segment d'extrémité terminale (130) à l'écart de la surface annulaire de confection du bandage pneumatique, le moyen d'élimination de segment comprenant des doigts de préhension (54, 56) pour entrer en contact par serrage avec le segment d'extrémité terminale (130), les doigts de préhension (54, 56) se déplaçant avec la portion coupée du segment d'extrémité terminale (130) jusqu'à un endroit situé à l'écart de la surface annulaire de confection du bandage pneumatique.

9. Procédé selon la revendication 8, comprenant en outre le fait de :
déplacer le moyen de coupe (62) depuis une position éloignée jusqu'à une position rapprochée par rapport à la surface annulaire de confection du bandage pneumatique, après avoir coupé le segment de ligne de câblé.

10. Procédé selon la revendication 8 ou 9 comprenant en outre au moins une des étapes consistant à :
transporter une portion coupée du segment de ligne de câblé à l'écart de la surface annulaire de confection du bandage pneumatique ;
mettre en alignement axial le segment de ligne de câblé tout en mettant le segment de ligne de câblé sous tension ;
mettre en alignement axial le segment de ligne de câblé par rapport au moyen de coupe (62) avant de couper le segment de ligne de câblé, ladite mise en alignement axial englobant le cas échéant la construction d'un pli de câblé de bandage pneumatique qui s'étend depuis le segment de ligne de câblé sur au moins une portion de la surface annulaire de confection du bandage pneumatique avant de couper le segment de ligne de câblé.

11. Procédé selon au moins une des revendications 8 à 10, comprenant en outre le repositionnement en rotation de la surface annulaire de confection du bandage pneumatique pour orienter le segment de ligne de câblé à l'opposé du moyen de coupe (62) avant de couper le segment de ligne de câblé et, le cas échéant, la construction d'un pli de câblé de bandage pneumatique qui s'étend depuis le segment de ligne de câblé sur au moins une portion de la surface annulaire de confection du bandage pneumatique avant le repositionnement de la surface annulaire de confection du bandage pneumatique.

12. Procédé selon au moins une des revendications 8 à 11, comprenant le fait de :
positionner un segment terminal de la ligne de câblé par-dessus un point de départ recherché à un endroit cible, de telle sorte que l'extrémité avant libre et l'extrémité arrière d'un segment terminal viennent se disposer sur les côtés opposés du point de départ recherché ;
mettre sous tension le segment terminal entre l'extrémité avant libre et l'extrémité arrière d'un segment terminal ; et
coupler la ligne de câblé au point de départ recherché.

13. Procédé selon au moins une des revendications 8 à 12, comprenant le fait de :
positionner un segment terminal de la ligne de câblé par-dessus un point de départ recherché à un endroit cible, de telle sorte que l'extrémité avant libre et l'extrémité arrière d'un segment terminal viennent se disposer sur les côtés opposés du point de départ recherché ;
construire un pli de câblé de bandage pneumatique avec la ligne de câblé en plaçant la ligne de câblé autour d'au moins une portion de la surface annulaire de confection du bandage pneumatique en partant du segment terminal ;
mettre sous tension le segment terminal positionné, entre l'extrémité avant libre et l'extrémité arrière d'un segment terminal positionné ; et
couper la ligne de câblé au point de départ recherché après la construction du pli de câblé de bandage pneumatique en plaçant la ligne de câblé autour d'au moins une portion de la surface annulaire de confection du bandage pneumatique.

14. Procédé selon la revendication 12 ou 13, dans lequel la mise sous tension du segment terminal comprend en outre le fait de :
saisir le segment terminal à proximité de l'extrémité avant libre d'un côté du point de départ recherché ; et
maintenir le segment terminal à proximité de l'extrémité arrière sur le côté opposé du point de départ recherché, le maintien du segment terminal comprenant en outre le fait de forcer la ligne de câblé sur la surface annulaire de confection du bandage pneumatique avec un membre de raclage, et dans lequel le procédé comprend en outre de manière facultative la construction d'un pli de câblé de bandage pneumatique avec la ligne de câblé en plaçant la ligne de câblé autour d'au moins une portion de la surface annulaire de confection du bandage pneumatique en partant avec l'étape de positionnement, et avant de couper la ligne de câblé au point de départ recherché.
